# FASCICULE DE BREVET EUROPEEN

(11) **EP 0 506 541 B1**
(45) Date de publication et mention de la délivrance du brevet: **24.05.1995**
(21) Numéro de dépôt: 92400788.3
(22) Date de dépôt: 24.03.1992
(51) Int. Cl.: B60S 1/38

(54) **Lame d'essuie-glace pour balai d'essuie-glace, notamment de véhicule automobile**
Wischgummi für Wischblatt, insbesondere für Kraftfahrzeuge
Wiper rubber for wiper blade, in particular for motor vehicles

(30) Priorité: 29.03.1991 FR 9103842
(43) Date de publication de la demande: 30.09.1992
(73) Titulaire: VALEO SYSTEMES D'ESSUYAGE, 78180 Montigny-Le-Bretonneux (FR)
(72) Inventeur: Maubray, Daniel, F-92130 Issy-Les-Moulineaux (FR)
(74) Mandataire: Gamonal, Didier

(56) Documents cités:
- FR-A- 2 628 047
- GB-A- 2 227 649

## Description

La présente invention se rapporte à une lame d'essuie-glace pour balai d'essuie-glace, notamment de véhicule automobile.

Les lames d'essuie-glaces élaborées en matière souple, généralement à base de caoutchouc, sont habituellement portées par une monture articulée de manière à former un ensemble appelé balai d'essuie-glace apte à essuyer une surface vitrée, telle qu'un pare-brise de véhicule automobile.

Ces lames comportent généralement une embase apte à être reliée, de manière connue en soi, à la monture du balai d'essuie-glace par un système de liaison tel que des griffes de fixation que présente ladite monture. Cette embase se poursuit par une charnière reliant l'embase à une lèvre d'essuyage propre à frotter sur la surface vitrée.

Cette charnière autorise, lors du mouvement de balayage, généralement un mouvement de rotation alternatif généré par un bras auquel est relié le balai, un basculement de la lèvre autour de la charnière dans le sens contraire du mouvement de balayage.

Il est admis que ce basculement se fasse autour d'un axe virtuel que l'on peut situer théoriquement au centre de la partie formant charnière.

Ainsi, pendant le mouvement de balayage, seule une surface minime de la lèvre d'essuyage est en contact avec la surface vitrée et la Demanderesse a constaté que les dispositions actuelle présentaient quelques inconvénients non négligeables.

En effet, il a été constaté que, lorsque le véhicule qui porte le balai d'essuie-glace circule à grande vitesse, un flux d'air vient balayer la lèvre d'essuie-glace et tend à renverser le sens dans lequel elle se trouve pour la faire basculer autour de l'axe virtuel de charnière dans le sens du mouvement de balayage et, cela en totalité ou en partie, ce qui entraîne un mauvais contact avec la surface vitrée générant un phénomène de broutement en produisant des variations à l'avancement du balai sur la surface vitrée et un mauvais essuyage de ladite surface tout en créant des bruits intempestifs nuisibles au confort du passager.

Il est connu par le document GB-A-2 227 649, qui décrit une lame selon la préambule de la revendication 1, de prévoir un balai d'essuie-glace dans lequel est disposé un moyen électromagnétique constitué de bobinages situés sur l'embase de la lame et de pôles métalliques placés sur la lèvre de manière à ce que, lorsque les bobinages sont alimentés, ils attirent un des pôles métalliques placés sur la lèvre de façon à faciliter le basculement de ladite lèvre autour de la charnière.

Ce dispositif nécessite d'une part un moyen de commande de l'alimentation électrique des bobinages et d'autre part de concevoir une lame d'essuie-glace comportant dans son corps, de manière fixe, les bobinages et les pôles ce qui complique non seulement l'élaboration d'une telle lame avec de nombreuses pièces extérieures qui n'ont aucun rapport avec l'essuyage mais aussi l'utilisation de cette lame qui présente des moyens de commande extérieurs pour obtenir un basculement de la lèvre de la lame.

La présente invention propose de remédier aux inconvénients mentionnés ci-dessus en proposant une lame d'essuie-glace qui interdit tout retournement de la lèvre d'essuyage lorsque celle-ci est parcourue par le flux d'air balayant la surface vitrée.

Suivant l'invention, une lame d'essuie-glace pour balai d'essuie-glace, notamment de véhicule automobile, comportant une embase, une charnière interposée entre ladite embase et une lèvre d'essuyage apte à basculer par rapport à l'embase autour d'un axe de basculement sensiblement parallèle à l'axe de ladite embase et de ladite lèvre, caractérisée en ce que des moyens de verrouillage à coopération de formes comportant au moins une saillie adaptée à coopérer avec un logement sont prévus entre la lèvre d'essuyage et l'embase en permettant de verrouiller ladite lèvre dans sa position basculée.

Grâce à l'invention, lors du mouvement de balayage, après basculement de la lèvre d'essuyage dans le sens contraire dudit mouvement de balayage, ladite lèvre est immobilisée dans cette position et ne peut en aucun cas être retournée dans le même sens que celui de ce mouvement de balayage et cela par un moyen très simple.

Les autres caractéristiques et avantages de la description vont ressortir maintenant de la description qui va suivre en se référant aux dessins annexés sur lesquels :
- la figure 1 est une vue en perspective montrant le profil de la lame d'essuie-glace, selon l'invention, disposée sur la monture d'un balai d'essuie-glace ;
- la figure 2 est une vue en coupe transversale montrant la section de la lame d'essuie-glace selon l'invention ;
- la figure 3 est une vue semblable à la figure 2 et qui montre la lame d'essuie-glace, selon l'invention, dans une position active ;
- la figure 4 est une vue en coupe partielle montrant, en section, une première variante de réalisation de la lame d'essuie-glace selon l'invention ;
- la figure 5 est une demi-vue semblable à la figure 4 et montrant la lame d'essuie-glace dans une position active ;
- la figure 6 est une vue en coupe partielle, en section, montrant une deuxième variante de réalisation de la lame d'essuie-glace selon la présente invention ;
- la figure 7 est une demi-vue en coupe semblable à la figure 6 et montrant la lame d'essuie-glace en position active ;
- la figure 8 est une vue en coupe partielle montrant, en section, une troisième variante de réalisation de la lame d'essuie-glace selon l'invention ;
- la figure 9 est une demi-vue semblable à la figure 8 et montrant la lame d'essuie-glace dans une position active.

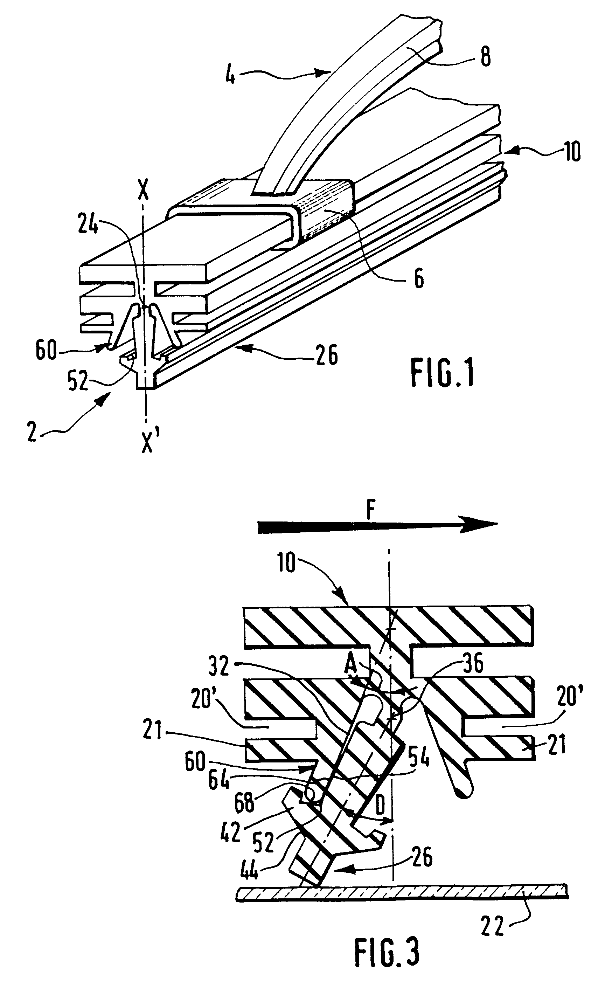

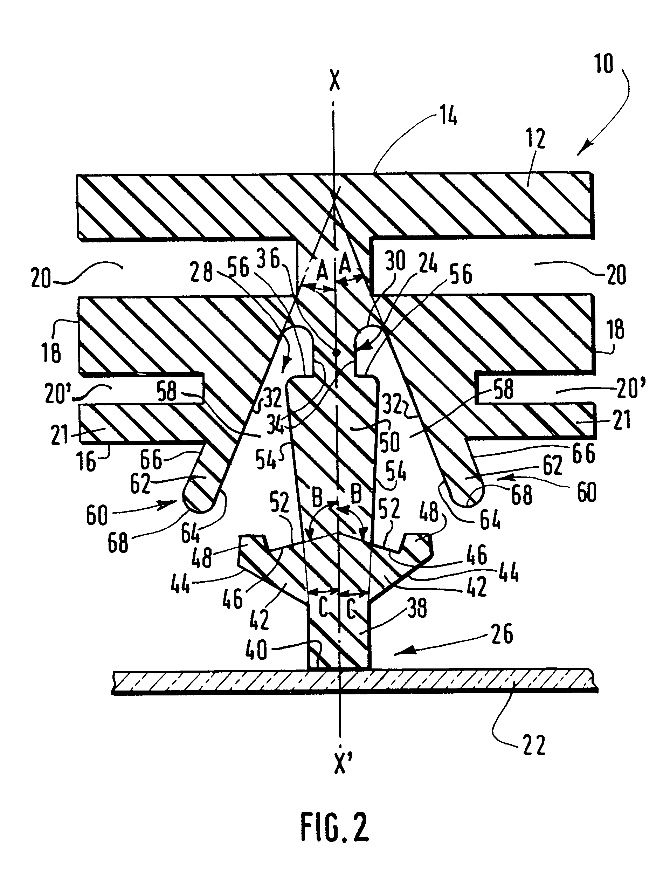

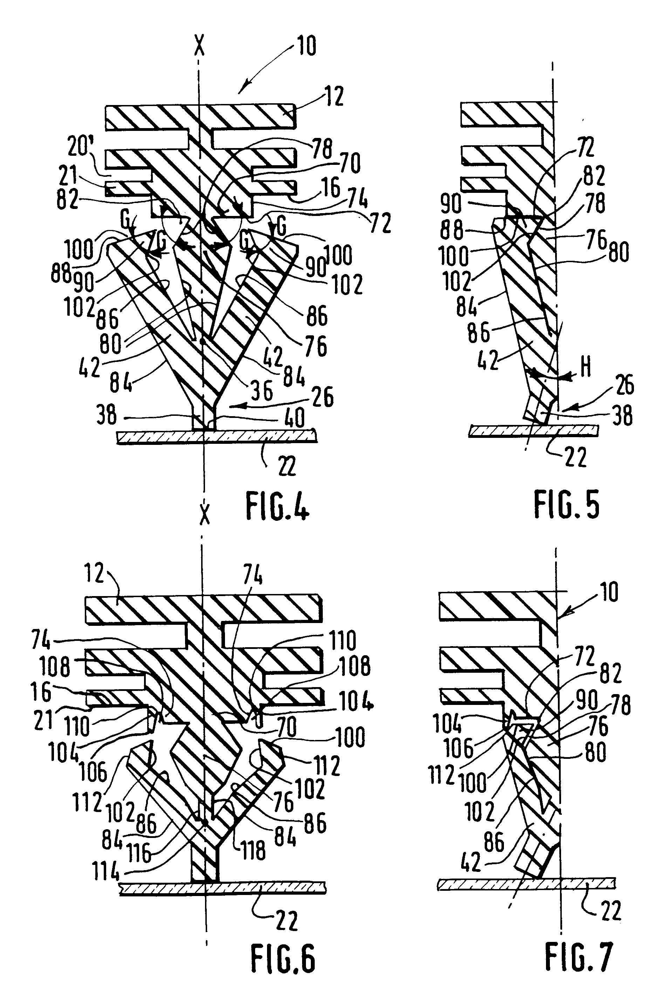

En se référant maintenant à la figure 1, la lame d'essuie-glace 2 est portée par une monture 4 par l'intermédiaire de griffes 6 que présente un palonnier terminal 8 constitutif de cette monture. L'association de la monture avec la lame constitue, dans son ensemble, un balai d'essuie-glace.

La lame d'essuie-glace d'axe général XX', comme mieux visible sur la figure 2, présente une embase 10 constituée d'une semelle 12 de forme générale parallélépipèdique rectangle, présentant une face horizontale supérieure 14, une face horizontale inférieure 16, et deux faces verticales 18.

A partir des faces verticales 18, sont prévues des cavités longitudinales 20 également de forme parallélépipèdique rectangle à flanc ouvert sur les faces verticales 18 et adaptées à recevoir les griffes 6 de la monture 4, ces cavités 20 étant symétriques par rapport à l'axe XX' en s'étendant préférentiellement tout au long de l'embase 10.

De plus, la semelle porte en-dessous des cavités 20 et au voisinage de la face 16, des cavités longitudinales 20' de forme parallélépipèdique rectangle de dimensions moindres que les cavités 20 et à flancs ouverts sur les faces verticales, de manière à former une paroi sensiblement horizontale 21 servant de protège-griffes qui sera explicité dans la suite de la description.

La semelle 12 porte, en direction d'une surface vitrée 22, telle qu'un pare-brise de véhicule automobile, une charnière 24 à laquelle est raccordée une lèvre d'essuyage 26 qui frotte sur la surface vitrée.

Comme visible sur la figure 2, la semelle 12 porte, dans sa région médiane, une rainure 28 longitudinale présentant un fond 30 et deux flancs 32.

Le fond 30 se trouve en retrait par rapport à la face horizontale inférieure 16 de la semelle 12 et se poursuit en direction de la surface vitrée 22 par les flancs 32 qui sont inclinés d'un même angle A par rapport à l'axe XX', de manière à diverger l'un par rapport à l'autre de façon à présenter une face ouverte en direction de ladite surface vitrée.

C'est à partir de ce fond que prend naissance la charnière 24 qui présente une forme parallélépipèdique rectangle s'étendant tout au long de la rainure 28 et dont les flancs verticaux 34 sensiblement parallèles aboutissent, à leur partie supérieure, sur le fond 30 de ladite rainure et, à leur partie inférieure, viennent rejoindre la lèvre d'essuyage 26.

La lèvre d'essuyage présente un axe de basculement 36 qui est généralement assimilé à un axe virtuel longitudinal que l'on peut situer au centre de la charnière 24 qui sera amené à se déformer lors du mouvement de balayage.

La lèvre 26 présente un élément frotteur 38 de forme générale parallélépipèdique rectangle dont la paroi inférieure 40 vient frotter sur la surface vitrée 22.

Cet élément frotteur se poursuit en direction de l'embase 10 par deux ailettes 42 disposées symétriquement chacune par rapport à l'axe XX'.

Chaque ailette fait saillie à partir de l'élément frotteur 38 dans la direction opposée audit axe XX' et s'étend tout au long de la lèvre.

Les ailettes 42 sont formées chacune par un côté incliné 44 faisant face à la surface vitrée et dont l'inclinaison est telle que sa direction s'écarte de ladite surface vitrée et par un côté incliné 46 qui est prévu en regard de l'embase 10 en formant un angle d'inclinaison B avec l'axe XX' de manière à être dirigé vers la surface vitrée, les côtés 44,46 aboutissent à leur extrémité opposée sur un flasque 48 et le côté 44 rejoint, par son extrémité la plus près de l'axe XX', l'élément frotteur 38, alors que le côté 46 aboutit, par son extrémité la plus près dudit axe, sur un élément de raccordement 50 rejoignant la charnière 24.

Le flasque 48 est disposé au voisinage de l'extrémité libre de chaque ailette en faisant saillie en direction de l'embase 10 et à distance de celui-ci, de manière à créer un logement creux 52, en forme de rainure, faisant face à ladite embase et limité par la paroi du flasque dirigé vers la lèvre, le côté 46 de l'ailette et l'élément de raccordement 50.

L'élément de raccordement 50 présente également une forme de parallélépipède s'étendant tout au long de la lèvre 26 et présentant deux parois 54 inclinées d'un même angle C par rapport à l'axe XX' dont les extrémités inférieures rejoignent les côtés 46 des ailettes 42 et dont les extrémités supérieures se poursuivent en direction de l'axe XX' par des parois horizontales 56 venant aboutir sur les flancs verticaux de la charnière 24.

Comme visible sur la figure 2, les parois 54 divergent l'une par rapport à l'autre à partir des ailettes 42 et ces parois sont prévues à distance des flancs 32 de la rainure 28 de manière à laisser subsister un espace libre 58 entre les parois et les flancs.

A partir de l'embase 10 sont prévues, symétriquement par rapport à l'axe XX', des saillies 60.

Ces saillies, en se reportant à la figure 2, sont des saillies issues de la face horizontale inférieure 16 de l'embase et se dirigeant vers la surface à essuyer en étant situées à proximité des ailettes 42.

Les saillies 60 se présentent sous la forme d'un voile longitudinal 62 s'étendant tout au long de l'embase et à proximité de la rainure 28.

Plus précisément, chaque voile 62 présente une direction inclinée sensiblement identique à la direction des flancs 32 de la rainure et présente une paroi intérieure 64, celle en regard de l'axe XX', qui est un prolongement des flancs 32 et une paroi extérieure 66 qui est sensiblement parallèle à la paroi 64 et qui vient rejoindre la face horizontale 16 de l'embase 10, les parois 64 et 66 se rejoignant à leur extrémité libre par un bord 68 de forme semi-cylindrique.

Bien entendu, et cela sans sortir du cadre de l'invention, les ailettes 42 peuvent s'étendre partiellement ou en totalité le long de la lèvre d'essuie-glace et elles peuvent porter les flasques 48, soit localement, soit sur toute leur longueur.

De même, il peut être prévu que les voiles 62 soient en correspondance avec les flasques 48 et s'étendent, de ce fait, soit partiellement, soit totalement, le long de la lèvre d'essuyage.

En se référant à la figure 3 qui montre la lame d'essuie-glace décrite jusqu'à maintenant dans une position de fonctionnement, la lèvre d'essuyage 26 a basculé autour de l'axe virtuel 36 pour former un angle D délimité par l'axe XX' et l'axe passant par le plan médian de ladite lèvre.

Ce basculement résulte du déplacement, selon la flèche F de la figure 3, du balai d'essuie-glace portant la lame d'essuie-glace qui, sous l'effet du frottement existant entre la lèvre 26 et la surface vitrée 22, ne peut que basculer dans le sens contraire de la flèche F, et cela autour de l'axe 36.

Dans cette position basculée, la paroi sensiblement verticale 54 de l'élément de raccordement est au contact avec le flanc 32 de la rainure et conjointement avec la paroi 64 du voile 62 et le bord libre 68 dudit voile est situé à l'intérieur du logement 52 que porte l'ailette 42.

Pour arriver à cette position, la lèvre 26 a basculé autour de l'axe 36 grâce à l'élasticité de la charnière 24 et, pendant ce mouvement, le bord libre vient au contact de la paroi externe du flasque, celle opposée à l'axe XX'.

Grâce à l'élasticité du voile 62 et du flasque 48, l'extrémité de ce voile passe au-dessus de l'extrémité libre du flasque, celle dirigée vers l'embase, pour ensuite venir pénétrer dans le logement 52 que porte l'ailette 42.

Dans cette position, la lèvre 26 est verrouillée par rapport à l'embase 10, et la paroi 21, précédemment décrite, sert à protéger la lèvre 24 du contact éventuel avec les griffes 6 disposées dans les cavités 20.

Bien entendu, et cela sans sortir du cadre de l'invention, il peut être prévu que la paroi 21 soit portée par le voile 62 en étant de même direction et de même forme.

Dans ce cas, même en cas de grande vitesse du véhicule, les flux d'air représentés sur la figure 3 par les flèches E et venant balayer le côté 44 de l'ailette 42 et l'élément frotteur 38 de la lèvre d'essuyage 26 en s'engouffrant plus particulièrement dans l'espace créé entre la surface vitrée 22 et la paroi inférieure 40 de cet élément frotteur ne peuvent entraîner le basculement de la lèvre en direction de l'autre côté de l'axe XX' car la saillie 60 est verrouillée dans le logement 52 entre la paroi 54 et la paroi du flasque 48 dirigée vers la lèvre en procurant ainsi un verrouillage de ladite lèvre d'essuie-glace dans sa position basculée.

Ainsi, l'embase et la lèvre d'essuyage présentent des moyens de verrouillage de l'un par rapport à l'autre consistant en des moyens à coopération de formes d'une partie mâle avec une partie femelle.

Lors de l'inversion du mouvement d'essuyage, c'est-à-dire dans le sens contraire de la flèche F figurant sur la figure 3, la saillie 60, sous l'effet de ce mouvement de balayage, quitte le logement 52 en glissant sur l'extrémité libre du flasque 48, la lèvre 26 bascule autour de l'axe virtuel 36 et la saillie 60 de l'ailette 42 symétrique opposée vient dans le logement 52 de la partie symétrique de la lame.

Bien entendu, il est prévu que l'angle de basculement D soit au moins égal à l'angle A que forment les flancs 32 et la paroi 64 avec l'axe XX'.

De même, les angles B et C sont prévus d'une manière telle que, pour l'angle C, la paroi 54 se trouve en contact avec le flanc 32 et la paroi 64 et, pour l'angle B, le fond du logement 52 constitué par le côté 46 de l'ailette soit disposé de manière sensiblement perpendiculairement à la direction du voile 62, et cela dans la position basculée de la lèvre 26.

On se réfère maintenant aux figures 4 et 5 qui montrent une première variante de réalisation de l'invention.

Dans cette variante, la semelle 12 se poursuit, par un talon 70 de forme parallélépipèdique rectangle de section et de dimension moindres que la semelle 12 et dont la face horizontale supérieure dudit talon est confondue avec la face horizontale inférieure 16 de la semelle 12, et qui présente une face horizontale inférieure 72 délimitée par des faces verticales 74 sensiblement parallèles entre elles.

Le talon se poursuit, toujours en direction de la surface vitrée, par une poutre longitudinale 76, dont la section correspond à l'association de deux triangles isocèles par leur base.

Ainsi, cette poutre présente au niveau de sa liaison avec la face inférieure 72 du talon 70 deux faces inclinées 78, symétriques par rapport à l'axe XX' général de la lame d'essuie-glace, chaque face inclinée étant dirigée vers la surface à essuyer en formant le même angle G par rapport à la face horizontale inférieure 72 du talon 70 et en s'écartant l'une de l'autre.

Les faces inclinées 78 se poursuivent en direction de la surface vitrée 22 par des faces inclinées 80, également symétriques l'une par rapport à l'autre selon l'axe XX' et formant avec les faces inclinées 78 un angle obtus, de manière à ce que les surfaces 80 onvergent l'une vers l'autre.

Ainsi, comme mieux visible sur la figure 4, l'embase 10 de la lame d'essuie-glace formée, dans ce cas, par la semelle 12,le talon 70 et la poutre 76, présente des logements creux en forme de rainures 82, symétriques par rapport à l'axe et formées chacune par les faces 72 et 78.

A la partie terminale de la poutre 76 dirigée vers la surface à essuyer 22 est prévue une lèvre d'essuyage 26 qui comporte, dans le cas de l'exemple décrit, deux ailettes 42 disposées symétriquement de part et d'autre de l'axe XX' de la lame.

La lèvre 26 présente un axe de basculement 36, dénommé ci-après "charnière", et qui dans le cas de cette figure est assimilé à un axe virtuel longitudinal que l'on peut situer au centre de l'extrémité de la poutre 30 associé avec ladite lèvre d'essuyage.

La lèvre 26 présente un élément frotteur 38 de forme générale parallélépipèdique rectangle dont la paroi inférieure 40 vient en contact avec la surface vitrée 22.

Ce frotteur 38 se poursuit en direction de l'embase 10 par les deux ailettes 42 qui forment un angle aigu avec l'axe XX' de la lame.

Les ailettes sont formées chacune par deux faces inclinées 84,86 sensiblement parallèles entre elles dont l'extrémité inférieure de la face extérieure 84 rejoint l'élément frotteur 38, l'extrémité inférieure de la face intérieur 86 vient rejoindre l'extrémité de la face inclinée 80 de la poutre 76 et qui présente une face d'extrémité plane 88 située à l'opposé de l'élément frotteur et au voisinage des logements en forme de rainures 82.

Au niveau de la face d'extrémité 88 et à partir de la face inclinée 86 s'érige, en direction des rainures 82, une saillie 90.

Les saillies 90 sont des saillies dirigées à partir des faces 86 des ailettes 42 en direction de l'axe XX'. Ces saillies présentent, en section, une forme complémentaire à celle décrite en relation avec les rainures 82 de l'embase 10.

Ainsi, les saillies 90 présentent une paroi sensiblement plane 100 résultant de la prolongation de la face d'extrémité 88 en direction de l'axe XX' et se poursuivant du côté de cet axe par une surface inclinée 102, surface inclinée par rapport à la paroi 100, du même angle G que l'angle formé entre la face 72 et les faces 78 et de direction vers la surface à essuyer 22.

Ainsi, la lame au repos, comme visible sur la figure 4, porte un axe XX' de symétrie générale et la lèvre 26 munie de ses ailettes 42 est symétrique également par rapport à l'axe XX'.

Bien entendu, et cela sans sortir du cadre de l'invention, les ailettes 42 peuvent s'étendre partiellement ou en totalité le long de la lèvre d'essuie-glace et elles peuvent porter les saillies 90, soit localement, soit sur toute leur longueur.

De même, il peut être prévu que les rainures 82 soient en correspondance avec les saillies 90 et s'étendre de ce fait, soit partiellement, soit totalement le long de la lèvre.

Ainsi, en se référant à la figure 5 qui montre la lame d'essuie-glace décrite jusqu'à maintenant dans une position de fonctionnement, la lèvre d'essuyage 26 a basculé autour de l'axe virtuel 36 pour former un angle H délimité par l'axe XX' et l'axe passant par le plan médian de ladite lèvre.

Dans cette position, la face 86 de l'ailette 42 vient en contact avec la face inclinée 80 de la poutre 76, la surface inclinée 102 de la saillie 90 vient au contact de la face inclinée 78 et une partie de la surface plane 88 associée à la paroi 100 de la saillie, vient en contact avec la face horizontale inférieure 72 du talon 70.

Dans ce cas, même en cas de grande vitesse du véhicule, les flux d'air venant balayer la face 84 de l'ailette 42 et l'élément frotteur 38 de la lèvre d'essuyage 26 ne peuvent entraîner le basculement de la lèvre en direction de l'autre côté de l'axe XX' car la saillie 90 est ancrée par frottement dans la rainure 82 formée par les surfaces 72,78 en procurant ainsi un verrouillage de la lèvre d'essuie-glace dans sa position basculée.

Ainsi, l'embase et la lèvre d'essuyage présentent des moyens de verrouillage de l'un par rapport à l'autre consistant en des moyens à coopération de formes d'une partie mâle avec une partie femelle.

Lors de l'inversion du mouvement d'essuyage, la saillie 90, sous l'effet de ce mouvement de balayage, quitte le contact des surfaces 72 et 78, la lèvre 26 bascule autour de l'axe virtuel 36 et la saillie 90 de l'autre ailette 42 vient au contact des surfaces 72,78 de la partie symétrique de la lame.

Bien entendu, il est prévu que l'angle de basculement H soit au moins égal à l'angle que forment les ailettes 46,48 avec l'axe XX'.

On se réfère maintenant aux figures 6 et 7 qui montrent une deuxième variante de réalisation, cette variante de réalisation portant sensiblement les mêmes éléments et, pour cela, aura les mêmes références.

Dans cette variante, il est prévu qu'au niveau des faces verticales 74 du talon 70 soit disposé, à distance de celles-ci, un flasque vertical 104 de direction sensiblement perpendiculaire à la face horizontale inférieure 16 de la semelle 12 en s'étendant tout au long de celle-ci et en faisant saillie par rapport à celle-ci.

Ce flasque présente une paroi extérieure à l'opposé de l'axe XX', une paroi intérieure en regard des faces 74 et sensiblement parallèle à la paroi extérieure, les deux parois venant se rejoindre par un bord 106 de forme semi-cylindrique en vis-à-vis de la surface 22.

La disposition de ce flasque ménage ainsi un évidement longitudinal 108 délimité par la face intérieure du flasque 104, la face 74 et un fond 110.

Sur les extrémités des ailettes 42 sont prévues, comme précédemment décrit, une surface sensiblement plane 100 et une surface inclinée 102. Mais, comme visible sur la figure 6, la surface plane 100 se poursuit en direction de la face 84 de l'ailette 42 par une face inclinée 112.

De plus, comme visible sur les figures, l'axe virtuel signifié sur les figures 4 et 5 a été remplacé par une charnière 114 de forme parallélépipèdique rectangle à flancs verticaux parallèles 116,118 dont les parties supérieures sont jointives avec la poutre 76 et dont les parties inférieures viennent rejoindre l'extrémité inférieure des surfaces 86 des ailettes 42.

En fonctionnement, comme visible sur la figure 7, la face 86 de l'ailette 42 vient au contact avec la face 80 de la poutre 76, la face inclinée 102 de la saillie 90 vient en contact avec la face 78, la face plane 100 vient en contact de la face horizontale inférieure 72 du talon et le bord libre 106 du flasque 104 vient au contact de la face inclinée 112 de manière à immobiliser la saillie 90 dans la rainure 82.

Ainsi, dans le cas de cette variante, outre un moyen de verrouillage, l'embase 10 et la lèvre 26 présentent un moyen d'immobilisation du moyen de verrouillage.

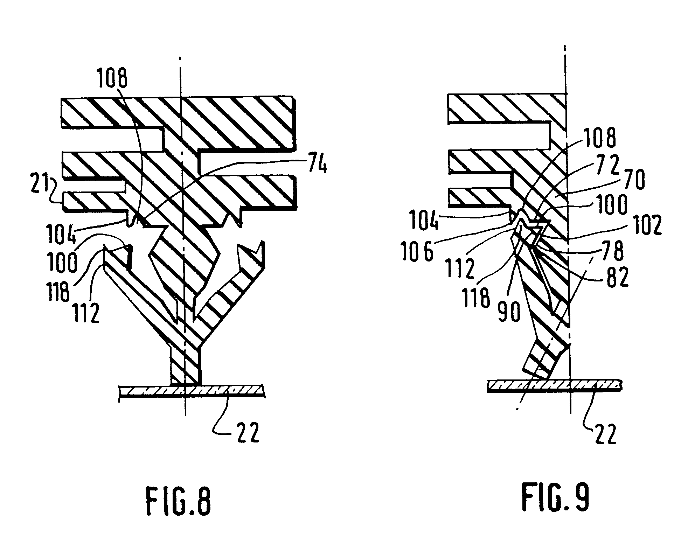

Dans le cas des figures 8 et 9, la lame d'essuie-glace présente sensiblement la même forme en section que celle décrite en relation avec les figures 6 et 7, seul différent le fait qu'au niveau de l'intersection de la face inclinée 112 et de la paroi plane 100, s'érige un bec 118 en direction de l'embase 10, ledit bec s'étendant longitudinalement le long de la lame et que, entre le flasque vertical 104 et la face sensiblement verticale 74 du talon 70, est prévu un évidement longitudinal 108 dont la forme en section correspond sensiblement à celle du bec 118.

Ainsi, en fonctionnement, comme visible sur la figure 9, la surface inclinée 78 coopère avec la surface inclinée 102, la paroi plane 100 coopère avec la face inférieure 72, l'extrémité libre 106 du flasque 104 appuie sur la face inclinée 112 et le bec longitudinal 118 coopère avec l'évidement 108 formé entre le flasque 104 et le talon 70 en assurant ainsi un clipage de la saillie 90 dans la rainure 82.

La présente invention n'est pas limitée aux exemples de réalisations décrits, mais englobe toutes variantes.

Notamment, il peut être prévu que, en relation avec les figures 4 et 5, l'axe virtuel 36 soit remplacé par une charnière telle que celle décrite en relation avec les figures 6 et 7, et cela sans sortir du cadre de l'invention.

De plus, il est bien entendu que, comme connu en soi, l'embase peut comporter des moyens de raidissement permettant de rigidifier l'embase pour son maintien par les griffes 6 du balai d'essuie-glace.

## Revendications

1. Lame d'essuie-glace pour balai d'essuie-glace, notamment de véhicule automobile, comportant une embase (10), une charnière (24,114) interposée entre ladite embase et une lèvre d'essuyage (26) apte à basculer par rapport à l'embase autour d'un axe de basculement (36) sensiblement parallèle à l'axe de ladite embase et de ladite lèvre, caractérisée en ce que des moyens de verrouillage à coopération de formes (52,60,82,90) comportant au moins une saillie (60,90) adaptée à coopérer avec un logement (52,82) sont prévus entre la lèvre d'essuyage (26) et l'embase (10) en permettant de verrouiller ladite lèvre dans sa position basculée.

2. Lame d'essuie-glace selon la revendication 1, caractérisée en ce que la saillie (60,90) et le logement (52,82) présentent des formes complémentaires.

3. Lame d'essuie-glace selon l'une des revendications précédentes, caractérisée en ce que il est prévu une saillie (60,90) et un logement (52,82) de part et d'autre de la lame.

4. Lame d'essuie-glace selon l'une des revendications précédentes, caractérisée en ce que la saillie (60) est portée par l'embase (10) et le logement (52) est porté par la lèvre (26).

5. Lame d'essuie-glace selon la revendication 4, caractérisée en ce que le logement (52) est porté par une ailette (42) issue de la lèvre (26).

6. Lame d'essuie-glace selon l'une des revendications 1 à 3, caractérisée en ce que la saillie (90) est portée par la lèvre d'essuyage (26) et le logement (82) sont portés par l'embase (10).

7. Lame d'essuie-glace selon la revendication 6, caractérisée en ce que la saillie (90) est portée par une ailette (42) issue de la lèvre (26).

8. Lame d'essuie-glace selon l'une des revendications précédentes, caractérisée en ce que des moyens d'immobilisation des moyens de verrouillage sont prévus entre la lèvre d'essuyage (26) et l'embase (10).

9. Lame d'essuie-glace selon la revendication 8, caractérisée en ce que les moyens d'immobilisation consistent en une coopération d'un flasque (104) issue de l'embase (10) avec une paroi plane (102) portée par la saillie (90).

10. Lame d'essuie-glace selon la revendication 9, caractérisée en ce que la saillie (90) porte un bec (118) coopérant avec un évidement (108) formé dans l'embase (10).

## Claims

1. A wiping strip for a screen wiper, especially for a motor vehicle, comprising a base (10) a hinge (24, 114) interposed between the said base and a wiping lip (26) which is adapted to tilt with respect to the base about a tilt axis (36) substantially parallel to the axis of the said base and the said lip, characterised in that locking means (52, 60, 82, 90) for mating cooperation, comprising at least one projection (60, 90) adapted to cooperate with a recess (52, 82), are arranged between the wiping lip (26) and the base (10) whereby to lock the said lip in its tilted position.

2. A wiping strip according to Claim 1, characterised in that the projection (60, 90) and recess (52, 82) have complementary profiles.

3. A wiping strip according to one of the preceding Claims, characterised in that a projection (60, 90) and a recess (52, 82) are arranged on either side of the strip.

4. A wiping strip according to one of the preceding Claims, characterised in that the projection (60) is carried by the base (10), and the recess (52) is carried by the lip (26).

5. A wiping strip according to Claim 4, characterised in that the recess (52) is carried by a fin (42) projecting from the lip (26).

6. A wiping strip according to one of Claims 1 to 3, characterised in that the projection (90) is carried by the wiping lip (26), and the recesses (82) are carried by the base (10).

7. A wiping strip according to Claim 6, characterised in that the projection (90) is carried by a fin (42) projecting from the lip (26).

8. A wiping strip according to one of the preceding Claims, characterised in that means for immobilising the locking means are arranged between the wiping strip (26) and the base (10).

9. A wiping strip according to Claim 8, characterised in that the immobilising means consist in cooperation of a rib (104) projecting from the base (10) with a flat wall (102) carried by the projection (90).

10. A wiping strip according to Claim 9, characterised in that the projection (90) carries a nib (118) cooperating with a recess (108) formed in the base (10).

## Patentansprüche

1. Wischgummi für ein Wischblatt, insbesondere für Kraftfahrzeuge, bestehend aus einer Einsetzleiste (10) und einem Gelenkstück (24, 114), das zwischen dieser Einsetzleiste und einer Wischlippe (26) eingefügt ist, die im Verhältnis zur Einsetzleiste um eine in etwa parallel zur Achse der Einsetzleiste und der Wischlippe verlaufende Kippachse (36) kippbar ist , **dadurch gekennzeichnet,** daß formschlüssige Arretiermittel (52, 60, 82, 90) mit mindestens einem Vorsprung (60, 90), der mit einer Aufnahme (52, 82) zusammenwirken kann, zwischen der Wischlippe (26) und der Einsetzleiste (10) vorgesehen sind, um die Wischlippe in ihrer gekippten Position zu arretieren.

2. Wischgummi nach Anspruch 1 , **dadurch gekennzeichnet,** daß der Vorsprung (60, 90) und die Aufnahme (52, 82) formschlüssig gestaltet sind.

3. Wischgummi nach einem der vorangehenden Ansprüche, **dadurch gekennzeichnet,** daß ein Vorsprung (60, 90) und eine Aufnahme (52, 82) beiderseits des Wischgummis vorgesehen sind.

4. Wischgummi nach einem der vorangehenden Ansprüche, **dadurch gekennzeichnet,** daß der Vorsprung (60) an der Einsetzleiste (10) vorgesehen und die Aufnahme (52) an der Wischlippe (26) angeordnet ist.

5. Wischgummi nach Anspruch 4 , **dadurch gekennzeichnet,** daß die Aufnahme (52) an einem Flügel (42) vorgesehen ist, der aus der Wischlippe (26) hervorgeht.

6. Wischgummi nach einem der Ansprüche 1 bis 3, **dadurch gekennzeichnet,** daß der Vorsprung (90) an der Wischlippe (26) vorgesehen und die Aufnahme (82) an der Einsetzleiste (10) angeordnet ist.

7. Wischgummi nach Anspruch 6 , **dadurch gekennzeichnet,** daß der Vorsprung (90) an einem Flügel (42) vorgesehen ist, der aus der Wischlippe (26) hervorgeht.

8. Wischgummi nach einem der vorangehenden Ansprüche, **dadurch gekennzeichnet,** daß Mittel zur Sicherung der Arretiermittel zwischen der Wischlippe (26) und der Einsetzleiste (10) vorgesehen sind.

9. Wischgummi nach Anspruch 8 , **dadurch gekennzeichnet,** daß die Sicherungsmittel durch das Zusammenwirken eines aus der Einsetzleiste (10) hervorgehenden Ansatzes (104) mit einer am Vorsprung (90) vorgesehenen ebenen Wand (102) gebildet werden.

10. Wischgummi nach Anspruch 9 , **dadurch gekennzeichnet,** daß der Vorsprung (90) eine Spitze (118) trägt, die mit einer in der Einsetzleiste (10) vorgesehenen Aussparung (108) zusammenwirkt.
